# EUROPEAN PATENT APPLICATION

(11) **EP 0 993 781 A1**
(43) Date of publication of application: **19.04.2000**
(21) Application number: 98203447.2
(22) Date of filing: 13.10.1998
(51) Int. Cl.: A23L 1/20, A61K 35/78

(54) **Improving immune function**

(71) Applicant: SOCIETE DES PRODUITS NESTLE S.A., 1800 Vevey (CH)
(72) Inventor: Logman, Margot, 1824 LS Alkmaar (NL); Dirren, Henri, 1806 St-Légier-La Chiésaz (CH); Bruessow, Harald, 1814 La Tour de Peilz (CH)

(57) **Abstract**

A method of improving immune function in a mammal. The mammal may be a pregnant woman. The mammal is administered a nutritional composition which contains soy. In the case of pregnant women, the improvement in immune function is transmitted to the child or children and hence the immune response in the child or children is increased. The nutritional composition also includes zinc, phytoestrogens and iron.

## Description

### Field of the Invention

This invention relates to a method for improving immune function in a mammal; especially a pregnant mammal and in the off-spring born to the mammal.

### Background of the Invention

Improving the immune function in a mammal has a profound, beneficial effect upon the health of the mammal. Improving the immune function of a mammal using medicaments is possible but the cost is high. An ideal solution would be to improve immune function through the diet.

The state of the immune function of pregnant women is important because the health of a pregnant woman has a profound effect upon the health of the child or children later born to the woman. Consequently, ensuring that pregnant women receive all the nutrients necessary for a healthy pregnancy is a primary goal. In general, the pregnant women should consume sufficient amounts of high quality protein, minerals and vitamins. In cases where the normal diet is unable to supply the necessary nutrients, supplementation is called for. Various nutritional supplements for pregnant and lactating women are now commercially available.

However, no matter how well nourished the pregnant women may be, she is as prone to bacterial or viral infection as before pregnancy. Any incidence of bacterial or viral infection is likely to affect her health and hence that of her child or children later born to her. The problem is even more acute in malnourished women. In many cases, this issue is dealt with by adequately vaccinating women, either before or during pregnancy. Unfortunately, not all women respond adequately to the vaccination.

Therefore there is a need for a means of increasing the immune response in mammals through diet.

### Summary of the Invention

Accordingly, in one aspect, this invention provides a method of increasing immune response in a mammal, the method comprising administering to the mammal a nutritional composition which contains soy.

It has been surprisingly discovered that the administration of a nutritional composition which contains soy to mammals significantly increases their immune response. Further, this increase in immune response is transmitted to the child or children or pregnant mammals.

Preferably, the mammal is a pregnant mammal; for example a pregnant woman.

In another aspect, this invention provides a method of increasing immune response in an infant, the method comprising administering to a pregnant woman during pregnancy a nutritional composition which contains soy.

Preferably, the nutritional composition further contains a source of zinc. For example, the nutritional composition may contain about 10 mg to about 80 mg of zinc per 100 g of nutritional composition.

The nutritional composition may further comprise phytoestrogens. Preferably, the nutritional composition comprises about 10 mg to about 55 mg of daidzein per 100 g of nutritional composition.

### Detailed Description of the Preferred Embodiments

Embodiments of the invention are now described by way of example only. The invention is a method of increasing the immune response in a mammal; for example a pregnant woman or in the child or children later born to her. The immune response is increased by administering to the mammal a nutritional composition which contains soy.

The soy source used to provide the soy may be any suitable soy source. For example, the soy source may be a soy flour, a soy extract, a soy extract enriched in isoflavones, and the like. Suitable soy sources are commercially available.

The nutritional composition preferably contains sufficient high quality protein for providing adequate nutrition to the mammal. For example, the nutritional composition may contain about 10g to about 50g of protein per 100 g of nutritional composition. More preferably, the nutritional composition contains about 20g to about 30g of protein per 100 g of nutritional composition. Any suitable protein source may be used such as soy protein, milk protein, casein and whey. However, the protein is preferably soy protein as provided by the soy source and milk protein. The soy protein may provide about 70% by weight to about 95% by weight of the total protein.

The nutritional composition preferably contains a source of zinc. The zinc may be present in the nutritional composition in an amount of about 10 mg to about 80 mg per 100 g of nutritional composition. For example, the nutritional composition may contain about 30 mg to about 60 mg of zinc per 100 g of nutritional composition.

The nutritional composition may further contain phytoestrogens. The phytoestrogens are preferably provided by the soy source. In particular, the nutritional composition may contain about 10 mg to about 55 mg of daidzein per 100 g of nutritional composition. The nutritional composition may also contain genistein.

The nutritional composition preferably contains a source of iron. The iron may be present in the nutritional composition in an amount of about 10 mg to about 100 mg per 100 g of nutritional composition. For example, the nutritional composition may contain about 30 mg to about 70 mg of iron per 100 g of nutritional composition. If desired, the iron may be encapsulated or complexed with a complexing agent.

Further, the nutritional composition may contain a source of vitamin A. The vitamin A may be present in the nutritional composition in an amount up to about 3000 RE per 100 g of nutritional composition. For example, the nutritional composition may contain about 1500 RE to about 2500 RE of vitamin A per 100 g of nutritional composition.

The nutritional composition may further includes sources of copper, magnesium, pantothenic acid, vitamin B6, vitamin B 12, vitamin C, vitamin D and vitamin E. For example, the nutritional composition may include about 0.5 mg to about 1.5 mg of copper, about 0.1 g to about 0.3 g of magnesium, about 2.5 mg to about 7.5 mg of pantothenic acid, about 1 mg to about 3 mg of vitamin B6, about 1 µg to about 3 µg of vitamin B 12, about 150 mg to about 350 mg of vitamin C, about 10 µg to about 25 µg of vitamin D and about 10 IU to about 30 IU of vitamin E; all per 100 g of nutritional composition. Iodine may also be included

The nutritional composition may contain a lipid source in addition to any lipid provided by the soy source. Suitable lipid sources include high oleic sunflower oil, sunflower oil, rapeseed oil, soy oil, olive oil, corn oil, milk fat, soy lecithin, hazelnut oil and coconut oils.

The nutritional composition may contain various flavours, sweeteners, and other additives. Natural sweeteners such as sucrose or artificial sweeteners such as acetosulfame and L-aspartyl based sweeteners may be used.

The nutritional composition preferably has an energy content, on a dry basis, of about 300 kcal/100g to about 1000 kcal/100g; for example an energy content of about 500 kcal/g.

The nutritional composition may be in any suitable form. For example, the nutritional composition may be in the form of a soluble powder, a liquid concentrate, or a ready-to-drink formulation. Soluble powders are particularly preferred. Alternatively the nutritional composition may be formulated in the form of solid or semi-solid foods such as deserts, snack bars, prepared meals, and the like.

The nutritional composition may be produced as is conventional; for example, for a nutritional composition in the form of a formula, the nutritional composition may be prepared by blending together the soy source and any additional protein, carbohydrate and lipid sources. If used, emulsifiers may be included in the blend. The vitamins and minerals may be added at this point but are usually added later to avoid thermal degradation. Any added lipophilic vitamins, emulsifiers and the like may be dissolved into the lipid source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture is then homogenised; for example in two stages at about 7 MPa to about 40 MPa in the first stage and about 2 MPa to about 14 MPa in the second stage. The homogenised mixture may then be further cooled to add any heat sensitive components; such as vitamins and minerals. The pH and solids content of the homogenised mixture is conveniently standardised at this point.

If it is desired to produce a powdered nutritional composition, the homogenised mixture is transferred to a suitable drying apparatus such as a spray drier or freeze drier and converted to powder. The powder should have a moisture content of less than about 5% by weight.

The nutritional composition may be used to enhance the immune function of mammals including pregnant women and, in turn, the children that they give birth to.

The amount of the nutritional composition required to be fed to a mammal will vary depending upon factors such as the mammal's condition, the mammal's body weight, the age of the mammal, and the other sources of nutrition consumed by the mammal. However the required amount may be readily set by a medical practitioner or nutritionist. In general, sufficient of the nutritional composition may be administered to provide the mammal with about 10 g to about 20 g of protein per day; for example about 12 g to about 18 g of protein per day. Similarly, sufficient of the nutritional composition may be administered to provide the patient with about 10 mg to about 20 mg of zinc per day; for example about 12 mg to about 18 mg of zinc per day.

The nutritional composition may be taken in multiple doses, for example 2 to 5 times, to make up the required daily amount or may taken in a single dose.

Specific examples of the invention are now described for further illustration.

### Example 1

A powdered nutritional formula is prepared from soy extract, skimmed milk, sucrose, milk fat, soy lecithin and vitamins and minerals. The composition of the formula is as follows:

| Component | Content /100g |
|---|---|
| Protein | 25.67 g |
| Lipid | 26.67 g |
| Carbohydrate | 36.67 g |
| Dietary fibre | 2.50 g |
| Sodium | 0.35 g |
| Potassium | 1.19 g |
| Chloride | 0.28 g |
| Calcium | 1.02 g |
| Phosphorus | 0.50 g |
| Magnesium | 0.19 g |
| Iron | 50 mg |
| Iodine | 273.33 µg |
| Copper | 1.03 mg |
| Zinc | 46.67 mg |
| Vitamin A | 1766.67 RE |
| Vitamin D | 18.33 µg |
| Vitamin E | 6 IU |
| Vitamin C | 253.33 mg |
| Vitamin B1 | 1.70 mg |
| Vitamin B2 | 1.70 |
| Niacin | 17.00 |
| Vitamin B6 | 2.00 |
| Folic acid | 733.33 |
| Pantothenic acid | 4.67 |
| Vitamin B12 | 2.00 |
| Biotin | 70.00 |

The formula has an energy density of 500 kcal per 100g. The formula is commercially available from Nestlé under the trade mark MOM SOY.

### Example 2

An amount of 38 g of the powder of example 1 is dissolved in 200 ml water to provide a drink. The drink has an energy content of about 150 kcal per serving of 200 ml.

### Example 3

A group of 360 pregnant women are recruited for the study. The study protocol is fully explained to the women and the community leaders. Free medical care is given to each woman during the study. The inclusion criteria are as follows:
- the woman is healthy and at the end of the 1^{st} trimester of pregnancy;
- the woman is between 18 and 40 years old;
- the woman has had between 1 to 5 previous pregnancies;
- the woman has had an interpregancy period of greater than 1 year;
- the woman has had a history of successful pregnancies, child births and lactation;
- the woman has an intention to breast feed for 9 months with exclusive breast feeding for the first 4 months;
- the woman does not smoke, drink alcohol and is not addicted to drugs;
- the woman has a stable residence; and
- the woman has a poor socio-economic status.

The women are separated into 4 groups of 90. The groups are then given nutritional supplements twice a day; six days a week. For two of the groups (Control groups A and B), the supplement is a placebo capsule. For the third group (Group 1), the supplement is the drink of example 2. For the last group (Control group C), the supplement is a capsule containing 15 mg of zinc in the form of zinc sulphate heptahydrate. The study is continued throughout the pregnancy and during 9 months of lactation. After delivery, the women in control group B are switched from the placebo capsule to the zinc capsule.

All women are supplemented with 400 µg folic acid daily and 105 mg iron weekly.

For the women, the following measurements are made:-
- at enrolment, at every 4^{th} week during pregnancy, 15 days after delivery, 1 month after delivery, and then every 4 weeks after delivery, anthropometry is carried out with weight, height, and mid upper arm circumference. Blood pressure is taken at the same time.
- morbidity is recorded upon each visit by a health worker; twice daily. This is controlled by a nurse and confirmed and coded by a physician.
- blood sampling is carried out at enrolment, at 8 months gestation, at 3 months postpartum and 6 months postpartum. Acute phase proteins, protein stabs, trace element stabs, vitamin status and haematology are determined.
- each mother is vaccinated against tetanus toxoid and *Streptococcus pneumoniae* at 5 months gestation. A tetanus booster is given at 8 months gestation. Antibody titres are measured in maternal serum and in cord blood at enrolment and at 8 months pregnancy. An oral vaccine against cholera is given at 3 months postpartum. Antibody titres in the milk are measured. An ELISA method is used to determine antibody titres.
- at around the 5^{th} day, 1 month, 3 months and 6 months after delivery, a milk sample of about 50 ml is taken in the morning. The milk is analysed for micronutrients, trace elements, rotavirus antibodies, lymphocytes and macrophages.
- dietary intake is measured on enrolment, 8 months gestation and 3, 6 and 9 months of lactation.

For the child or children delivered during the study, the following measurements are made:-
- at birth, 5 days after delivery, 15 days after delivery, 1 month after delivery, and then every 4 weeks after delivery, anthropometry is carried out with length, weight, head circumference, and mid upper arm circumference.
- morbidity is recorded upon each visit by a health worker; twice daily. This is controlled by a nurse and confirmed and coded by a physician.
- blood sampling is carried out at birth (venous cord blood) and at 9 months postpartum.
- specific antibodies to maternal vaccines are measured in cord blood and to child vaccines in child serum at birth and at 9 months postpartum.

285 women complete the study.

It is found that baseline titres of tetanus toxoid varied considerably in the women. Since women with high initial titres have limited capacity to respond to repetitive booster vaccinations, the baseline titres were separated in tertiles. In this way, the effect of treatment in the different groups is evaluated separately.

The outcome variable for immune function is selected to be seroconversion after tetanus toxoid vaccination. That is tetanus toxoid titres after tetanus toxoid vaccination divided by baseline tetanus toxoid titres. The natural logarithm of the data is used as the data is not normally distributed. Tetanus toxoid titres are controlled for haemodilution during pregnancy, by dividing the specific titres by the total IgG titres.

ANCOVA analyses are carried out on the antibody titres in maternal serum. The model is controlled for age, parity, race and time between second booster vaccination and blood taking. The results are as follows:

| N=285 | Average of Control Groups A+B | Control Group C | Group 1 | P ANCOVA |
|---|---|---|---|---|
| **Lowest tertile of initial antibody titres** | | | | |
| Antibody titres (IU/ml) | | | | |
| Before vaccination | 0.62 | 0.55 | 0.81 | |
| After vaccination | 4.99 | 4.74 | 6.55 | 0.95 |
| n | 44 | 27 | 22 | |

| **Middle tertile of initial antibody titres** | | | | |
|---|---|---|---|---|
| Antibody titres (IU/ml) | | | | |
| Before vaccination | 2.26 | 2.41 | 2.20 | |
| After vaccination | 5.40 | 8.72 | 9.44 | 0.002* |
| n | 48 | 18 | 29 | |

| **Highest tertile of initial antibody titres** | | | | |
|---|---|---|---|---|
| Antibody titres (IU/ml) | | | | |
| Before vaccination | 6.47 | 5.59 | 7.97 | |
| After vaccination | 11.70 | 8.52 | 15.59 | 0.15 |
| n | 44 | 29 | 24 | |

The analysis showed a significant effect between Group 1 and Control Groups A and B in the second tertile of initial titres (N=92; p=0.002). No significant effect could be determined between Group 1 and Control Group C (T-test, p=0.85). In the second tertile, the titres after vaccination for Group 1 is 75% higher those of Control Groups A and B. The titres in Control Group C are 62% higher those of Control Groups A and B.

In general, the antibodies are well transferred to the new-born child as reflected in the cord blood. The correlation between the antibody titres in the mothers and the cord blood is very high (R=0.92 after in transformation and controlling for haemodilution by dividing the specific titres by total IgG antibody titres). The titre concentrations are equal in the mothers and the child (paired T-test, p=0.78) Therefore any effect in the mother is reflected in the child.

The number of responders is then determined for each tertile. A responder is defined to be someone whose tetanus toxoid titre levels are more than 4 times higher after vaccination and at enrolment. The results are as follows:

| **Responders** | **Average of Control Groups A+B** | **Group 1** | **Control Group C** | **p value CHI- square** |
|---|---|---|---|---|
| **Lowest tertile of initial antibody titres** | | | | |
| Non responders | 13 | 7 | 8 | |
| Responders | 31 | 15 | 19 | 0.98 |
| Total | 44 | 22 | 27 | |
| % responders | 70.5 | 68.2 | 70.4 | |

| **Middle tertile of initial antibody titres** | | | | |
|---|---|---|---|---|
| Non responders | 40 | 17 | 12 | |
| Responders | 8 | 12 | 6 | 0.05 |
| Total | 48 | 29 | 18 | |
| % responders | 16.7 | 41.4 | 33.3 | |

| **Highest tertile of initial antibody titres** | | | | |
|---|---|---|---|---|
| Non responders | 40 | 27 | 24 | |
| Responders | 4 | 2 | 0 | 0.33 |
| Total | 45 | 29 | 24 | |
| % responders | 9.1 | 6.9 | 0.0 | |

| **All tertiles of initial antibody titres** | | | | |
|---|---|---|---|---|
| Non responders | 93 | 51 | 44 | |
| Responders | 43 | 29 | 25 | 0.71 |
| Total | 136 | 80 | 69 | |
| % responders | 31.6 | 36.3 | 36.2 | |

The number of responders in the second tertile in higher in Group 1 and Control Group C as compared to Control Groups A and B (41% and 33.3% compared to 16.7%, CHI-square test: p=0.05).

## Claims

1. The use of soy in the preparation of a nutritional composition for increasing immune response in a mammal.

2. The use according to claim 1 in which the mammal is a pregnant woman.

3. The use of soy in the preparation of a nutritional composition intended for pregnant women for increasing immune response in children born to the women.

4. The use according to any of claims 1 to 3 in which the nutritional composition contains a source of zinc.

5. The use according to claim 4 in which the nutritional composition contains about 10 mg to about 80 mg of zinc per 100 g of nutritional composition.

6. The use according to any of claims 1 to 5 in which the nutritional composition further comprises phytoestrogens.

7. The use according to claim 6 in which the nutritional composition contains about 10 mg to about 55 mg of daidzein per 100 g of nutritional composition.

8. The use according to any of claims 1 to 7 in which the nutritional composition further comprises a source of iron.

9. The use according to claim 8 in which the nutritional composition contains about 10 mg to about 100 mg iron per 100 g of nutritional composition.

10. The use according to any of claims 1 to 9 in which the nutritional composition further comprises a source of vitamin A.
